# EUROPEAN PATENT APPLICATION

(11) **EP 4 826 493 A1**
(43) Date of publication of application: **21.10.2026**
(21) Application number: 26170835.8
(22) Date of filing: 07.04.2026
(51) Int. Cl.: G06F 1/329, G06F 1/3228, G06F 1/3234, G06F 1/3287, G06F 1/3293, G06F 9/46, G06F 9/4401, G06F 11/14

(54) **COMPUTER SYSTEM AND POWER CONSUMPTION MANAGEMENT METHOD THEREOF**

(30) Priority: 16.04.2025 CN 202510484104
(71) Applicant: Amlogic (Shanghai) Co., Ltd., Shanghai 201203 (CN)
(72) Inventor: YU, Xiao, Shanghai (CN); FU, Xihan, Shanghai (CN); XIAO, Pengfei, Shanghai (CN); WANG, Xue, Shanghai (CN)
(74) Representative: Maiwald GmbH

(57) **Abstract**

Embodiments of the present disclosure provide a computer system and a power consumption management method for a computer system. The method includes saving first information before entering a first sleep mode, wherein the first information at least includes information stored in an RA register of CPU working registers, and the first sleep mode at least includes controlling a CPU to power down; entering the first sleep mode; and in response to being awakened from the first sleep mode, restoring at least the RA register of the CPU working registers and returning an address of a next instruction to the RA register to restore a pre-sleep state. The present disclosure can accurately and seamlessly restore the pre-sleep state on the basis of achieving ultra-deep sleep, so that the software is unaware of the ultra-deep sleep process and the wake-up process.

## Description

### CROSS-REFERENCE TO RELATED APPLICATIONS

This application claims priority to Chinese Patent Application No. 202510484104.2, filed on April 16, 2025, the entire disclosure of which is incorporated herein by reference.

### TECHNICAL FIELD

The present disclosure relates to the technical field of computer, and in particular, to a computer system and a power consumption management method for a computer system.

### BACKGROUND

With the rapid development of mobile internet, battery-powered computer systems, such as smartphones, tablets, laptops, wearable devices, and various embedded systems, are widely used in daily life, industrial production, healthcare, and other fields due to their portability and flexibility.

On the one hand, users' demands for device performance are constantly increasing, such as faster processing speeds, higher-definition displays, and more powerful functions, all of which lead to increased system power consumption. On the other hand, users also want devices to have longer battery life, reduce charging frequency, and improve ease of use.

There is an urgent need for a power consumption management method to reduce the power consumption of computer systems.

### SUMMARY

In view of this, embodiments of the present disclosure provide a computer system and a power consumption management method for a computer system, which can accurately and seamlessly restore the pre-sleep state on the basis of achieving ultra-deep sleep, so that the software in the computer system is unaware of the ultra-deep sleep process and the wake-up process.

To achieve the above objectives, the embodiments of the present disclosure provide the following technical solutions.

In a first aspect, embodiments of the present disclosure provide a power consumption management method for a computer system, comprising: saving first information before entering a first sleep mode, wherein the first information at least comprises information stored in an RA register of CPU working registers, and the first sleep mode at least comprises controlling a CPU to power down; entering the first sleep mode; and in response to being awakened from the first sleep mode, restoring at least the RA register of the CPU working registers and returning an address of a next instruction to the RA register to restore a pre-sleep state.

Optionally, the first information further comprises: task stack information and system stack information; wherein in response to being awakened from the first sleep mode, restoring at least the RA register of the CPU working registers comprises: restoring the saved system stack information before restoring the RA register of the CPU working registers; and after restoring the RA register of the CPU working registers, switching a system stack to a task stack and restoring the saved task stack information.

Optionally, an operating system of the computer system is configured to be event-driven; wherein the event-driven configuration is used to indicate automatically returning to an idle task state when no event is generated.

Optionally, the method comprises: after entering an idle task state, detecting whether a preset sleep condition is satisfied; and in response to determining that the preset sleep condition is satisfied, entering the first sleep mode according to an interval between a triggering time of a current event and a triggering time of a next event; wherein the interval is within a first preset time range.

Optionally, detecting whether the preset sleep condition is satisfied comprises: determining that the preset sleep condition is satisfied when no running event exists in a task stack and/or a system stack; and determining that the preset sleep condition is not satisfied when a running event exists in the task stack and/or the system stack.

Optionally, the method further comprises: entering a second sleep mode, the second sleep mode indicating controlling a first hardware group other than the CPU to power down, each hardware device in the first hardware group having a power greater than a first power threshold; wherein the second sleep mode is entered after entering the idle task state, detecting whether the preset sleep condition is satisfied, and in response to determining that the preset sleep condition is satisfied, according to the interval between the triggering time of the current event and the triggering time of the next event being within a second preset time range, wherein the upper limit of the second preset time range is less than the lower limit of the first preset time range.

Optionally, the method further comprises: entering a third sleep mode, the third sleep mode indicating controlling the first hardware group other than the CPU and at least a portion of other hardware to power down; wherein the third sleep mode is entered after entering the idle task state, detecting whether the preset sleep condition is satisfied, and in response to determining that the preset sleep condition is satisfied, according to the interval between the triggering time of the current event and the triggering time of the next event being within a third preset time range, wherein the upper limit of the third preset time range is less than or equal to the lower limit of the first preset time range, and the lower limit of the third preset time range is greater than or equal to the upper limit of the second preset time range.

Optionally, the task stack information comprises a task stack pointer; and/or the system stack information comprises a system stack pointer.

Optionally, the method further comprises: saving service timer information before entering the first sleep mode.

Optionally, saving the service timer information comprises: saving a sleep timestamp of a service timer.

Optionally, in response to being awakened from the first sleep mode, the method further comprises: restoring the service timer to the pre-sleep state.

Optionally, restoring the service timer to the pre-sleep state comprises: adding a timing duration of a sleep timer to the saved sleep timestamp of the service timer to obtain the pre-sleep state of the service timer; wherein the sleep timer is a timer operating in the sleep mode.

Optionally, before entering the first sleep mode, the method further comprises: disabling a global interrupt.

Optionally, the method further comprises: initializing all interrupts of the CPU.

Optionally, initializing all interrupts of the CPU comprises: initializing a clock signal of the CPU; and enabling interrupts of the CPU.

Optionally, an operating system of the computer system is FreeRTOS.

In a second aspect, embodiments of the present disclosure provide a computer system, comprising: a terminal including a memory and a processor, wherein the memory stores a computer program executable on the processor, and the processor is configured to execute the computer program to perform the steps of the above-described power consumption management method for a computer system.

Optionally, the computer system further comprising: an external bus wake-up source; and a power management circuit, configured to supply power to the terminal after being awakened by the external bus wake-up source.

In a third aspect, embodiments of the present disclosure also provide a computer-readable storage medium storing a computer program thereon, wherein when the computer program is executed by a processor, the power consumption management method provided in the first aspect is executed.

In a fourth aspect, embodiments of the present disclosure provide a computer program product, comprising a computer program, wherein when executed on a computer, the computer execute the power consumption management method provided in the first aspect.

In a fifth aspect, embodiments of the present disclosure provide a chip (or a device for communication), having a computer program stored thereon, wherein when the computer program is executed by the chip, the power consumption management method provided in the first aspect is executed.

In a sixth aspect, embodiments of the present disclosure provide a chip module, having a computer program stored thereon, wherein when the computer program is executed by the chip module, the power consumption management method provided in the first aspect is executed.

In a seventh aspect, embodiments of the present disclosure provide a system for communication, comprising a device for performing the method provided in the first aspect.

Compared with the prior art, the technical solutions in the embodiments of the present disclosure have the advantages as follows:
In the embodiments of the present disclosure, by pre-saving the information of the return address (RA) register of the CPU working registers, the computer system can achieve CPU power-down, carry the operating system into the first sleep mode (i.e., ultra-deep sleep), and then in the wake-up phase, by restoring at least the RA register and returning the address of the next instruction to the RA register, the pre-sleep state can be restored. Compared with directly powering down without any processing, resulting in information loss, the above scheme can accurately and seamlessly restore the pre-sleep state on the basis of achieving ultra-deep sleep, so that the software is unaware of the ultra-deep sleep process and the wake-up process.

### BRIEF DESCRIPTION OF THE DRAWINGS

In order to more clearly illustrate the embodiments of the present disclosure or the technical solutions in the prior art, the following briefly introduces the drawings required for use in the embodiments or the description of the prior art. Obviously, the drawings described below are merely embodiments of the present disclosure. For a person skilled in the art, other drawings can be obtained based on the provided drawings without paying any creative work.
FIG. 1 shows a flowchart illustrating a power consumption management method for a computer system according to an embodiment of the present disclosure;
FIG. 2 shows a flowchart illustrating a method for saving first information according to an embodiment of the present disclosure;
FIG. 3 shows a flowchart illustrating a method for entering a first sleep mode according to an embodiment of the present disclosure;
FIG. 4 shows a flowchart illustrating a method for waking up from a first sleep mode according to an embodiment of the present disclosure; and
FIG. 5 shows a structural diagram illustrating a computer system according to an embodiment of the present disclosure.

### DETAILED DESCRIPTION

The technical solutions of embodiments of the present disclosure will be clearly and completely described below with reference to the accompanying drawings in the embodiments of the present disclosure. Obviously, the described embodiments are only a part of the embodiments of the present disclosure, and not all of them. Based on the embodiments of the present disclosure, all other embodiments obtained by those skilled in the art without creative effort are within the scope of protection of the present disclosure.

As mentioned above, for battery-powered computer systems, battery life is a key factor affecting user experience, thus necessitating a reduction in the power consumption of battery-powered computer systems.

Research has found that in one power consumption management method, without power loss to the Central Processing Unit (CPU), the CPU, carrying the operating system (OS), enters sleep mode. At this time, the CPU can be considered to be in a halt state, thus achieving the effect of entering a low-power mode and waking up while still operating in the same position. In other words, the CPU can resume operation by directly reading the pointer from the halt state.

Further research has found that although the CPU does not lose power in the above solution, there is still additional leakage current, the specific amount depending on the amount of CPU leakage current. In some scenarios with high CPU leakage current, it is still difficult to meet the requirements.

Research revealed that in another power consumption management method, the application scenario is a single-task system. The CPU enters sleep mode without an operating system. Although the CPU itself loses power, because it's a single-task system, the CPU doesn't need to save any data; it can simply restart from the beginning after power-on and resume operation by re-initializing the CPU.

Further research found that because the above solution is a single-task system, it lacks an operating system and is only suitable for smaller embedded systems. Specifically, without an operating system to assist in task management and scheduling, the system suffers from poor hierarchical structure and real-time performance in complex systems. It's highly likely that some processing will be delayed, requiring an increase in CPU frequency, thus increasing power consumption. It also lacks flexibility in low-power design, easily wasting significant time and increasing power consumption, ultimately failing to meet the requirements.

In the embodiments of the present disclosure, by pre-saving the information of the return address (RA) register of the CPU working registers, the computer system can achieve CPU power-down, carry the operating system into the first sleep mode (i.e., ultra-deep sleep), and then in the wake-up phase, by restoring at least the RA register and returning the address of the next instruction to the RA register, the pre-sleep state can be restored. Compared with directly powering down without any processing, resulting in information loss, the above scheme can accurately and seamlessly restore the pre-sleep state on the basis of achieving ultra-deep sleep, so that the software is unaware of the ultra-deep sleep process and the wake-up process.

To make the above-mentioned objects, features and advantages of the present disclosure more apparent and understandable, specific embodiments of the present disclosure will be described in detail below with reference to the accompanying drawings.

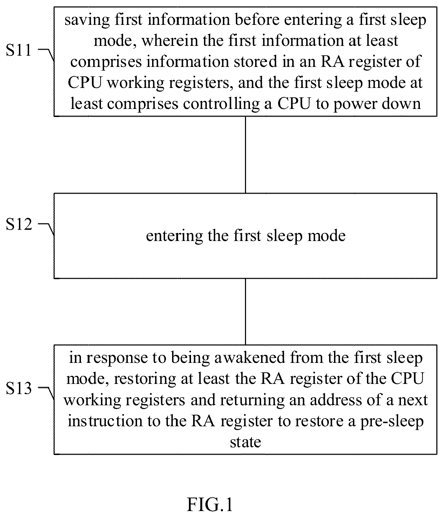

Referring to FIG. 1, FIG. 1 shows a flowchart illustrating a power consumption management method for a computer system according to an embodiment of the present disclosure. The method can be used in a computer system and may include:
Step S11: saving first information before entering a first sleep mode, wherein the first information at least includes information stored in an RA register of CPU working registers, and the first sleep mode at least includes controlling a CPU to power down;
Step S12: entering the first sleep mode; and
Step S13: in response to being awakened from the first sleep mode, restoring at least the RA register of the CPU working registers and returning an address of a next instruction to the RA register to restore a pre-sleep state.

In a specific implementation of step S11, the computer system may include a terminal and an external device for waking up the terminal.

In some embodiments, the operating system of the computer system may be configured to be event-driven; wherein the event-driven configuration is used to indicate automatically returning to an idle task state when no event is generated.

Specifically, since the idle task state only enters when the system is idle, it does not occupy system resources.

Specifically, during the device's lifespan from power-on to power-off, it is in a dormant state for the vast majority of the time. In some embodiments, the operating system is configured with event triggering as its core; when no events occur, it automatically enters a low-power system to execute a low-power strategy.

In some embodiments, by designing the operating system as event-driven, tasks are only triggered to run when events occur, without time-slice rotation. When no events occur, it always returns to the idle task state, allowing the battery to operate for a longer time under the same battery power conditions, extending battery life and enhancing the user experience.

In some embodiments, the operating system of the computer system is FreeRTOS.

Specifically, FreeRTOS is an open-source, free, lightweight real-time operating system (RTOS) designed specifically for embedded systems, featuring high portability, low cost, and enhanced system reliability.

By incorporating FreeRTOS, embodiments of the present disclosure can be adapted to any battery-powered system, disabling interrupts as needed before sleep and enabling interrupts after wake-up.

In some embodiments, the first information may further include: task stack information and system stack information.

Wherein, the task stack is the private stack space during task execution, used to store task context information and function calls. The system stack is the global stack space used by the operating system kernel, primarily used for interrupt handling and kernel function calls.

In some embodiments, the task stack information includes: a task stack pointer; and/or, the system stack information includes: a system stack pointer.

It should be noted that the task stack information may also contain other appropriate information besides pointers; similarly, the system stack information may also contain other appropriate information besides pointers.

Specifically, since the system enters deep sleep in the idle task, it needs to first save the task stack pointer to retention memory (MEM), such as retention random access memory (RAM).

It should be noted that in some embodiments, the CPU carries the OS into deep sleep and then loses power to obtain lower power consumption. In user mode, without any processing, the CPU directly loses power in the task stack, which can easily lead to information loss when the CPU wakes up and powers on again.

Research has found that during CPU power loss, the device automatically operates in machine mode, and the code uses the system stack. In user mode, within the task stack environment, upon waking from machine mode and the system stack after a power outage, the software inevitably cannot return to idle tasks. Considering the many intermediate states of business execution, the system cannot restart the operating system, making it prone to malfunction.

In some embodiments, before entering deep sleep, the software first obtains the current task stack pointer (sp) in the idle task and saves it to the task control block (TCB), then switches from user mode to machine mode.

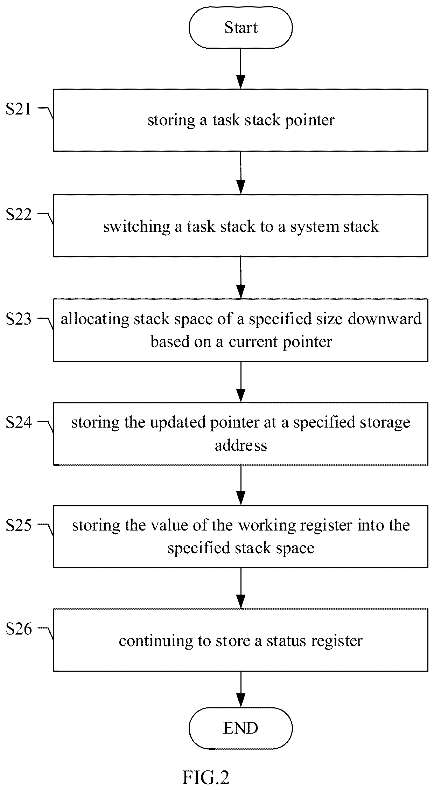

Referring to FIG. 2, FIG. 2 shows a flowchart illustrating a method for saving first information according to an embodiment of the present disclosure. The method may include steps S21 to S26. The steps are described below.

In step S21, storing a task stack pointer.

Specifically, since the system enters deep sleep under idle tasks, the task stack pointer is first saved to retention memory.

In step S22, switching a task stack to a system stack.

In some embodiments, the user mode is switched to machine mode, i.e., from the task stack to the system stack.

More specifically, since the task stack and system stack may switch at any time during system operation-for example, when software enters an interrupt, it works on the system stack, while when a task is running, it works on the task stack-it is necessary to store the pointer to the system stack.

In step S23, allocating stack space of a specified size downward based on a current pointer.

Specifically, a space is allocated in retention memory (such as retention RAM) to store the CPU working registers.

In step S24, storing the updated pointer at a specified storage address.

Specifically, the updated pointer is the system stack pointer, which is stored in retention memory (such as retention RAM).

In step S25, storing the value of the working register into the specified stack space.

Furthermore, the value of the working register may include information stored in the Return Address (RA) register of CPU working registers.

Specifically, the RA register can be stored and used as the PC pointer return value.

In some embodiments, since the CPU loses power, it is necessary to save the CPU's working registers, including the storage of the important RA register, so that execution can continue later when returning to the idle task sleep position.

In step S26, continuing to store a status register.

Specifically, by storing the status register, functions such as disabling global interrupts can be implemented, thereby disabling the CPU's ability to respond to all maskable interrupts, which helps prepare for entering a low-power mode.

It should be noted that other contents besides the RA register in the CPU working registers can also be stored, as well as other appropriate registers.

Continuing to refer to FIG. 1, in step S12, the first sleep mode is entered.

In some embodiments, the first sleep mode is entered after entering an idle task state, detecting whether a preset sleep condition is satisfied, and in response to determining that the preset sleep condition is satisfied, according to the interval between the trigger time of the current event and the triggering time of the next event; wherein the interval is within a first preset time range.

In some embodiments, services can be divided into modules, and a voting mechanism can be provided, with completion representing the ability to sleep and running representing the inability to sleep.

In some embodiments, the step of detecting whether the preset sleep condition is satisfied may include: determining that the preset sleep condition is satisfied when no running event exists in a task stack and/or a system stack; determining that the preset sleep condition is not satisfied when a running event exists in the task stack and/or the system stack.

In some embodiments, in response to the voting result that sleep is not possible, the software can return to the idle task and execute Wait for Interrupt (WFI) in all cases.

Furthermore, in response to sleeplessness, the CPU frequency can be reduced to lower system power consumption. This allows for minimizing power consumption by reducing the frequency when the preset sleep conditions are not satisfied and the CPU cannot be powered down.

In some embodiments, when it is determined that the preset sleep conditions are satisfied, a voting mechanism can be set up to calculate the sleep time based on the possible trigger time of the next service. Based on the length of the sleep time, a decision can be made to enter different low-power modes of the system.

In the first specific embodiment, it can be determined first whether a shorter interval is met, and then whether a longer interval is met, and enter a lighter type of sleep within the shorter interval and a longer type of sleep within the longer interval.

In the second specific embodiment, it can be determined first whether a longer interval is met, and then whether a shorter interval is met, and enter a longer type of sleep within the longer interval, and a lighter type of sleep within the shorter interval.

In the third specific embodiment, a preset time range corresponding to each sleep mode can be preset, and the corresponding sleep mode can be selected by determining which preset time range the interval time falls into.

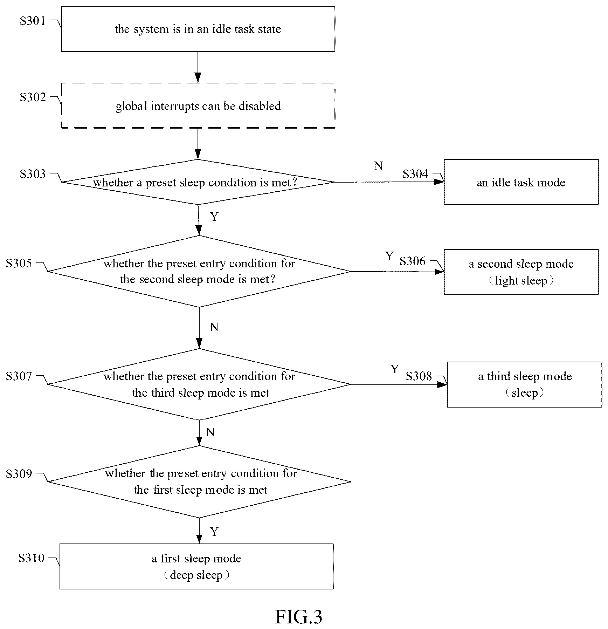

It should be noted that FIG. 3 shows a specific embodiment that combines the second and third specific embodiments, but is not limited thereto.

Referring to FIG. 3, FIG. 3 shows a flowchart illustrating a method for entering a first sleep mode according to an embodiment of the present disclosure. The method may include steps S301 to S310, which are described below.

In step S301, the system is in an idle task state.

Specifically, the computer system's operating system can be configured to be event-driven, automatically returning to the idle task state when no events occur.

In some embodiments, the first to third sleep modes are entered after entering the idle task state.

In step S302, global interrupts can be disabled.

Disabling global interrupts means disabling the CPU's ability to respond to all maskable interrupts by manipulating the CPU's status register.

In some embodiments, disabling global interrupts before entering the first sleep mode can be used to protect critical sections or prepare for entering a low-power mode.

In step S303, it is determined whether a preset sleep condition is met. If the determination result is yes, step S305 can be executed; otherwise, step S304 can be executed.

The determination of the preset sleep condition can be referred to the preceding description and the relevant description of step S12, and will not be repeated here.

In some embodiments, an idle task mode and three sleep modes can be defined to manage different low-power modes.

These are: a first sleep mode (deep sleep, also known as ultra-deep sleep mode), a second sleep mode (light sleep, also known as light sleep mode), and a third sleep mode (sleep, also known as deep sleep mode).

In some embodiments, the first sleep mode can be configured to power down the CPU, causing almost the entire chip to lose power; the second and third sleep modes have different levels of power loss, but the CPU itself does not lose power, only entering its own built-in sleep mode.

In step S304, the idle task mode is activated.

In some embodiments, the idle task mode may include: executing WFI, division clock (DIV CLK), CLK gating, and enabling global interrupts.

In step S305, it is determined whether the preset entry condition for the second sleep mode is met. If the determination result is yes, step S306 can be executed; otherwise, step S307 can be executed.

In step S306, the second sleep mode, also known as shallow sleep or light sleep mode.

In some embodiments, the second sleep mode can be used to indicate controlling a first hardware group other than the CPU to power down, each hardware device in the first hardware group having a power greater than a first power threshold.

The power of the hardware device can be its rated operating power or a power determined based on the application scenario.

In a non-limiting embodiment, the first power threshold can be selected from [0.1W, 10W].

Wherein the second sleep mode is entered after entering the idle task state, detecting whether the preset sleep condition is satisfied, and in response to determining that the preset sleep condition is satisfied, according to the interval between the triggering time of the current event and the triggering time of the next event being within a second preset time range. The upper limit of the second preset time range is less than the lower limit of the first preset time range.

In some embodiments, the first preset time range of the first sleep mode with CPU power-down is the longest, and its lower limit is also relatively large.

In some embodiments, the second sleep mode may include: physical (PHY)/radio frequency (RF) power-down, CLK gating, and CPU WFI.

In this context, physical layer (PHY) power-down can be used to indicate that the physical layer has entered a low-power mode or is completely powered off.

In some embodiments, by setting an appropriate second preset time range and hardware with appropriate power, the hardware with higher power consumption can be controlled to enter sleep mode, thus meeting the low-power requirement to a certain extent.

In step S307, it is determined whether the preset entry condition for the third sleep mode is met. If the determination result is yes, step S308 can be executed; otherwise, step S309 can be executed.

In step S308, the third sleep mode can also be referred to as deep sleep or deep sleep mode.

In some embodiments, the third sleep mode is used to indicate controlling the first hardware group other than the CPU and at least a portion of other hardware to power down.

In this system, the power of each hardware device in the first hardware group exceeds the first power threshold. The other hardware devices are all hardware devices other than the CPU and the first hardware group, which are partially or completely powered down in the third sleep mode.

For more information on the first power threshold, please refer to the preceding text and the description of step S306; it will not be repeated here.

Wherein the third sleep mode is entered after entering the idle task state, detecting whether the preset sleep condition is satisfied, and in response to determining that the preset sleep condition is satisfied, according to the interval between the triggering time of the current event and the triggering time of the next event being within a third preset time range. The upper limit of the third preset time range is less than or equal to the lower limit of the first preset time range, and the lower limit of the third preset time range is greater than or equal to the upper limit of the second preset time range.

In some embodiments, the first preset time range of the CPU power-down first sleep mode is the longest, with a larger lower limit. The third sleep mode is next, followed by the second sleep mode. That is, the second preset time range of the second sleep mode is the shortest, with a smaller upper limit.

In some embodiments, the third sleep mode may include: MAC power-down/PHY/RF power-down, CLK gating, and CPU WFI.

The Media Access Control Address (MAC) power-down can be used to indicate that the MAC layer enters a low-power mode or is completely powered off.

In some embodiments, by setting an appropriate third preset time range, most hardware except the CPU can be controlled to enter sleep mode, thus better meeting the low-power requirements.

In step S309, it is determined whether the preset entry condition for the first sleep mode is met. If the determination result is yes, step S310 can be executed.

It should be noted that in some embodiments, for cases where the preset entry condition for the first sleep mode is not met, subsequent execution steps are not specifically limited.

In some embodiments, if the condition for entering the preset first sleep mode is not met, the system may return to the idle task mode, or return to the third sleep mode, or return to the second sleep mode, or enter other appropriate working modes.

In step S310, the first sleep mode, also known as ultra-deep sleep or ultra-deep sleep mode.

In some embodiments, the first sleep mode is used to indicate that the CPU is powered down, the entire chip is almost completely powered down, that is, most of the hardware is powered down.

Referring to FIG. 1, in step S13, in response to being awakened from the first sleep mode, restoring at least the RA register of the CPU working registers and returning an address of a next instruction to the RA register to restore a pre-sleep state.

In some embodiments, due to the need for extremely low standby power consumption, controlling the CPU to power down, including the system stack, task stack, and working registers, is stored in retention memory and restored sequentially upon wake-up.

It should be noted that regardless of the low-power mode, the software implements an instant sleep/wake-up function; that is, the software continues execution from the point where it entered sleep mode upon waking. However, in ultra-low-power mode, since the CPU is completely powered down, only a small number of wake-up sources are maintained. Therefore, the solution in embodiments of the present disclosure requires a special wake-up step based on the CPU power-down situation.

In some embodiments, the step of in response to being awakened from the first sleep mode, restoring at least the RA register of the CPU working registers may include: restoring the saved system stack information before restoring the RA register of the CPU working registers; and after restoring the RA register of the CPU working registers, switching a system stack to a task stack and restoring the saved task stack information.

Specifically, in order to achieve a seamless transition of a service between sleep and wake-up, the task stack and system stack can be saved, as well as the PC return value.

More specifically, under the condition of carrying an OS, even if the CPU loses power, it can still wake up from where it started sleeping. To ensure that the software is unaware of the wake-up process, the software must return to the idle task state after waking up and return to the position where it entered sleep to continue executing code.

It should be noted that even if the PC pointer is stored, the software cannot actually directly obtain the PC pointer. In embodiments of the present disclosure, when the CPU runs and calls a function, it stores the address of the current function in the RA register. When the function returns, it assigns RA to the PC, and then the PC automatically increments by N bytes to start executing the next instruction. In other words, the RA pointer is obtained instead of the PC pointer. Here, N is a positive integer.

In one specific embodiment, N=4, so RA can be stored, and upon waking, RA can be directly incremented by 4.

In embodiments of the present disclosure, by pre-saving the information stored in a return address (RA) register of CPU working registers, the computer system can achieve CPU power-down, carrying the operating system into a first sleep mode (i.e., ultra-deep sleep mode). Then, during the wake-up phase, by restoring at least the RA register and returning the address of the next instruction to the RA register, the pre-sleep state can be restored. Compared to directly powering down without any processing, resulting in information loss, the above scheme can accurately and seamlessly restore the pre-sleep state while achieving ultra-deep sleep, making the software unaware of the ultra-deep sleep process and the wake-up process.

In some embodiments, the order of recovery after wake-up can be as follows: first, obtain the stored system stack pointer, then restore the working registers, including RA. Then switch from machine mode to user mode. The steps of restoring RA and switching modes are crucial. In user mode, restore the previously stored task stack pointer, then increment the restored RA by N and return to the initial sleep position to continue executing code.

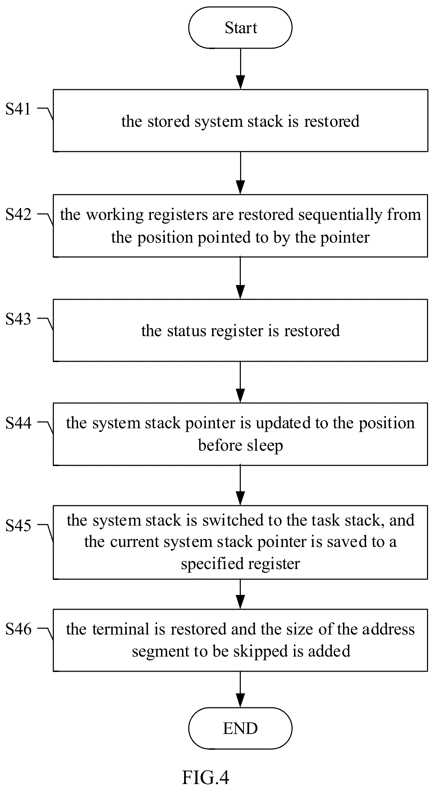

Referring specifically to FIG. 4, FIG. 4 shows a flowchart illustrating a method for waking up from a first sleep mode according to an embodiment of the present disclosure. The method may include steps S41 to S46, which are described below.

In step S41, the stored system stack is restored.

In step S42, the working registers are restored sequentially from the position pointed to by the pointer.

Specifically, the stored system stack pointer can be obtained first, and then the working registers, including the RA register, can be restored.

In step S43, the status register is restored.

In step S44, the system stack pointer is updated to the position before sleep.

In step S45, the system stack is switched to the task stack, and the current system stack pointer is saved to a specified register.

Specifically, machine mode can be switched to user mode.

In step S46, the terminal is restored and the size of the address segment to be skipped is added.

Specifically, in user mode, the previously stored task stack pointer is restored, and then the RA register can be manipulated, adding the size of the address segment to be skipped (i.e., the restored RA plus N), and after returning, the system can return to the initial sleep position and continue executing code.

In some embodiments, the method further includes: saving service timer information before entering the first sleep mode.

Further, the step of saving the service timer information may include: saving a sleep timestamp of a service timer.

In some embodiments, saving service timer information, especially saving the sleep timestamp of the service timer, helps to accurately return to the previous state.

In some embodiments, in response to being awakened from the first sleep mode, the method may further include: restoring the service timer to the pre-sleep state.

Further, restoring the service timer to the pre-sleep state includes: adding a timing duration of a sleep timer to the saved sleep timestamp of the service timer to obtain the pre-sleep state of the service timer; wherein the sleep timer is a timer operating in the sleep mode.

Furthermore, the timer operating in sleep mode can be a real time clock timer (RTC timer).

An RTC is an independent hardware module that can be used to provide accurate time and date information, and can also be used as an external CPU timer in conjunction with an internal CPU timer (such as SysTick) to meet the system's time management needs.

In some embodiments, a 32K RTC timer can be used as the internal wake-up source.

In some embodiments, before entering the first sleep mode, the process may further include: disabling a global interrupt. For example, refer to the scheme shown above and in FIG. 3.

After being woken up from the first sleep mode, the process may further include: initializing all interrupts of the CPU.

Furthermore, the step of initializing all interrupts of the CPU may include: initializing a clock signal of the CPU; and enabling interrupts of the CPU.

In some embodiments, by initializing the clock signal of the CPU and enabling interrupts of the CPU, the interrupt state of the CPU can be restored.

It should be noted that initializing all interrupts of the CPU after disabling global interrupts may also include other appropriate operations, such as configuring the interrupt controller and setting the interrupt vector table.

In some embodiments, the operation of initializing all interrupts of the CPU after disabling global interrupts ensures that the system can operate stably and efficiently after re-enabling global interrupts, while avoiding interrupt conflicts or data corruption. This further guarantees the implementation of low-power functions.

In some embodiments, in response to being woken up from the first sleep mode, the method further includes one or more of the following: restoring RF, restoring MAC, restoring PHY, and restoring other power-down components.

In some embodiments, after being woken up from the first sleep mode (or the second sleep mode or the third sleep mode), the system can return to the idle task state.

In some embodiments, after returning to the idle task state, the method may further include: re-initializing the CPU's built-in time base (Tick), which is a timer used for OS scheduling; and re-enabling CPU interrupts to ensure that service interrupts can be opened normally.

Specifically, in the operating system, Tick can be a periodic time interrupt generated by the system timer, used to drive the operating system's task scheduling, time management, timeout handling, and other functions. The CPU's built-in Tick typically refers to a periodic interrupt signal generated by a hardware timer (such as SysTick) within the CPU.

In some embodiments, by setting the above two steps after returning to the idle task state, it can be ensured that interrupts are enabled only after everything else has been restored.

It should be noted that in embodiments of the present disclosure, an external wake-up source can be set to improve wake-up reliability.

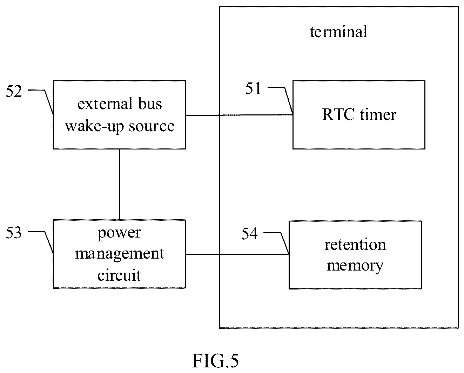

Referring to FIG. 5, FIG. 5 shows a structural diagram illustrating a computer system according to an embodiment of the present disclosure.

The computer system may include a terminal, which may include a memory and a processor. The memory stores a computer program executable on the processor. The processor is configured to execute the computer program to perform the steps of the above-described power consumption management method for a computer system.

In some embodiments, the terminal may include an RTC timer 51 and a retention memory (Retention MEM) 54.

Furthermore, the RTC timer 51 may be a timer with a lower precision than the service timer.

In some embodiments, a 32K RTC timer can be used.

Specifically, since the service timer is a high-precision timer and the sleep timer is a 32K low-precision timer, the high-precision timer and the 32K timer need to be synchronized and saved before entering sleep mode, and the 32K timer and the high-precision timer need to be synchronized and restored after waking up. This synchronization algorithm can be implemented in hardware or software.

Furthermore, the retention memory (Retention MEM) 54 can be retention RAM.

For more information on the RTC timer and retention RAM, please refer to the preceding text and the descriptions in FIGS. 1 to 4; they will not be repeated here.

In some embodiments, the computer system may also include: an external bus wake-up source 52; and a power management circuit 53, configured to supply power to the terminal after being awakened by the external bus wake-up source.

Specifically, an independent power management circuit 53 can be set up. This power management circuit 53 supports wake-up by the RTC timer 51 and the external bus wake-up source. After being woken up, the power management circuit 53 sequentially powers on each power supply of the chip.

In some embodiments, to achieve ultra-low power consumption, the system needs to maintain a minimum power supply circuit. The lower the operating voltage of this power supply circuit, the better; for example, it can operate at 0.7~0.9V.

The above embodiments can be implemented entirely or partially through software, hardware, firmware, or any other combination thereof.

The computer system can be located in devices such as mobile phones, computers, tablets, invehicle terminals, and wearable devices, but is not limited to these.

In some embodiments, the device to which the computer system belongs can be a Wi-Fi device or a Bluetooth device, such as a Bluetooth Low Energy device.

Although disclosed as above, the present disclosure is not limited to the foregoing description. A person skilled in the art can make various changes and modifications without departing from the spirit and the scope of the present disclosure. Thus, the scope of protection of the present disclosure should be subject to the scope defined by the claims.

## Claims

1. A power consumption management method for a computer system, comprising:
saving first information before entering a first sleep mode, wherein the first information at least comprises information stored in an RA register of CPU working registers, and the first sleep mode at least comprises controlling a CPU to power down;
entering the first sleep mode; and
in response to being awakened from the first sleep mode, restoring at least the RA register of the CPU working registers and returning an address of a next instruction to the RA register to restore a pre-sleep state.

2. The power consumption management method according to claim 1, wherein the first information further comprises: task stack information and system stack information;
wherein in response to being awakened from the first sleep mode, restoring at least the RA register of the CPU working registers comprises:
restoring the saved system stack information before restoring the RA register of the CPU working registers; and
after restoring the RA register of the CPU working registers, switching a system stack to a task stack and restoring the saved task stack information.

3. The power consumption management method according to claim 1, wherein an operating system of the computer system is configured to be event-driven;
wherein the event-driven configuration is used to indicate automatically returning to an idle task state when no event is generated.

4. The power consumption management method according to claim 1, wherein the method comprises:
after entering an idle task state, detecting whether a preset sleep condition is satisfied; and
in response to determining that the preset sleep condition is satisfied, entering the first sleep mode according to an interval between a triggering time of a current event and a triggering time of a next event;
wherein the interval is within a first preset time range.

5. The power consumption management method according to claim 4, wherein detecting whether the preset sleep condition is satisfied comprises:
determining that the preset sleep condition is satisfied when no running event exists in a task stack and/or a system stack; and
determining that the preset sleep condition is not satisfied when a running event exists in the task stack and/or the system stack.

6. The power consumption management method according to claim 4, wherein the method further comprises:
entering a second sleep mode, the second sleep mode indicating controlling a first hardware group other than the CPU to power down, each hardware device in the first hardware group having a power greater than a first power threshold;
wherein the second sleep mode is entered after entering the idle task state, detecting whether the preset sleep condition is satisfied, and in response to determining that the preset sleep condition is satisfied, according to the interval between the triggering time of the current event and the triggering time of the next event being within a second preset time range, wherein the upper limit of the second preset time range is less than the lower limit of the first preset time range.

7. The power consumption management method according to claim 6, wherein the method further comprises:
entering a third sleep mode, the third sleep mode indicating controlling the first hardware group other than the CPU and at least a portion of other hardware to power down;
wherein the third sleep mode is entered after entering the idle task state, detecting whether the preset sleep condition is satisfied, and in response to determining that the preset sleep condition is satisfied, according to the interval between the triggering time of the current event and the triggering time of the next event being within a third preset time range, wherein the upper limit of the third preset time range is less than or equal to the lower limit of the first preset time range, and the lower limit of the third preset time range is greater than or equal to the upper limit of the second preset time range.

8. The power consumption management method according to claim 2, wherein:
the task stack information comprises a task stack pointer;
and/or the system stack information comprises a system stack pointer.

9. The power consumption management method according to claim 1, wherein the method further comprises:
saving service timer information before entering the first sleep mode.

10. The power consumption management method according to claim 9, wherein saving the service timer information comprises:
saving a sleep timestamp of a service timer.

11. The power consumption management method according to claim 10, wherein in response to being awakened from the first sleep mode, the method further comprises:
restoring the service timer to the pre-sleep state.

12. The power consumption management method according to claim 11, wherein restoring the service timer to the pre-sleep state comprises:
adding a timing duration of a sleep timer to the saved sleep timestamp of the service timer to obtain the pre-sleep state of the service timer;
wherein the sleep timer is a timer operating in the sleep mode.

13. The power consumption management method according to claim 1, wherein before entering the first sleep mode, the method further comprises:
disabling a global interrupt.

14. The power consumption management method according to claim 13, wherein the method further comprises:
initializing a clock signal of the CPU; and
enabling interrupts of the CPU.

15. A computer system, comprising:
a terminal including a memory and a processor, wherein the memory stores a computer program executable on the processor, and the processor is configured to execute the computer program to perform apower consumption management method for a computer system;
an external bus wake-up source; and
a power management circuit, configured to supply power to the terminal after being awakened by the external bus wake-up source;
wherein the method comprises:
saving first information before entering a first sleep mode, wherein the first information at least comprises information stored in an RA register of CPU working registers, and the first sleep mode at least comprises controlling a CPU to power down;
entering the first sleep mode; and
in response to being awakened from the first sleep mode, restoring at least the RA register of the CPU working registers and returning an address of a next instruction to the RA register to restore a pre-sleep state.
